# EUROPEAN PATENT APPLICATION

(11) **EP 4 734 501 A1**
(43) Date of publication of application: **29.04.2026**
(21) Application number: 23953566.9
(22) Date of filing: 27.09.2023
(51) Int. Cl.: H04N 9/31

(54) **DETECTION METHOD AND APPARATUS**

(71) Applicant: Shenzhen Yinwang Intelligent Technologies Co., Ltd., Shenzhen, Guangdong 518110 (CN)
(72) Inventor: CHEN, Xingyu, Shenzhen, Guangdong 518129 (CN); YU, Ping, Shenzhen, Guangdong 518129 (CN); ZHAO, Dongfeng, Shenzhen, Guangdong 518129 (CN); TONG, Kainian, Shenzhen, Guangdong 518129 (CN); CHEN, Xiangyu, Shenzhen, Guangdong 518129 (CN); HU, Zijian, Shenzhen, Guangdong 518129 (CN); DAI, Yijie, Shenzhen, Guangdong 518129 (CN); PENG, Xu, Shenzhen, Guangdong 518129 (CN)
(74) Representative: Maiwald GmbH
(86) International application number: PCT/CN2023/122304
(87) International publication number: WO 2025/065414

(57) **Abstract**

A detection method and apparatus are disclosed and relate to the field of projection device technologies, and can simply and efficiently obtain a more accurate definition of a projected to-be-detected image, to further quantitatively obtain a projection quality value of a projection device. In the method, an energy detector detects energy values of pixels of different color regions of the to-be-detected image, and obtains a first parameter of the to-be-detected image through calculation based on the energy values, where the first parameter may indicate definition of the to-be-detected image. Projection quality of the projection device may be determined based on the first parameter.

## Description

### TECHNICAL FIELD

The present invention relates to the field of projection device technologies, and specifically, to a detection method and apparatus.

### BACKGROUND

A projection device mainly includes an electromechanical control part and an optical system part. In a production process of the projection device, key optical elements of the optical system part need to be adjusted, so that definition of an image projected by the projection device reaches a standard, ensuring subsequent use of the projection device.

In a related technology, definition of a projected image is usually determined through manual visual inspection or by obtaining the projected image with a camera, to determine resolving power of a projection device. However, these two manners have low detection efficiency and low accuracy.

### SUMMARY

This application provides a detection method and apparatus, which can simply and efficiently obtain a more accurate definition value of a projected to-be-detected image, to further quantitatively obtain a projection quality value of a projection device.

To achieve the foregoing objectives, embodiments of this application provide the following technical solutions.

According to a first aspect, this application provides a detection method. The method includes: obtaining a first energy value of a first region and a second energy value of a second region of a to-be-detected image, where the first region is a single-pixel projection region of a first color, the second region is a single-pixel projection region of a second color adjacent to the first region, and the to-be-detected image includes at least one first region and at least one second region; and the first energy value and the second energy value are used to calculate a first parameter of the to-be-detected image, where the first parameter indicates definition of the to-be-detected image.

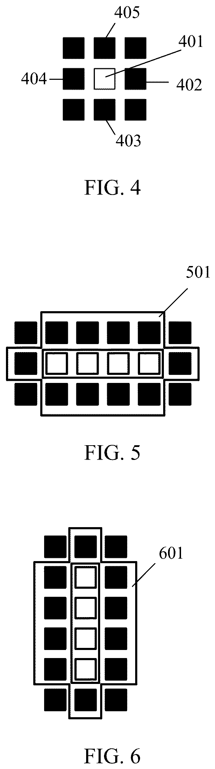

In other words, the energy detector may detect the first energy value of the first region and the second energy value of the second region of the to-be-detected image. For example, as shown in FIG. 4, a first energy value Ew1 of a first region 401 is 250, a second energy value Ed1 of a second region 402 is 16, a second energy value Ed2 of a second region 403 is 16, a second energy value Ed3 of a second region 404 is 14, and a second energy value Ed4 of a second region 405 is 20. The first energy value and the second energy value may be used to calculate a first parameter of the to-be-detected image. The first parameter may be a CTF or an MTF, and indicates the definition of the to-be-detected image. This can simply and efficiently obtain a more accurate definition value of a projected to-be-detected image, to further obtain a projection quality value of a projection device quantitatively.

In a possible implementation, the method further includes: obtaining a third energy value, where the third energy value is a background light energy value of a detection environment; and the first energy value, the second energy value, and the third energy value are used to calculate the first parameter of the to-be-detected image.

Optionally, the first energy value and the second energy value include impact of background light. In this embodiment of this application, a difference between the first energy value and the third energy value and a difference between the second energy value and the third energy value may be calculated, to eliminate the impact of the background light. For example, a third energy value Ebk may be 2.

In this way, the impact of the background light is eliminated, to obtain a more accurate definition value of the to-be-detected image, and further quantitatively obtain the projection quality value of the projection device.

In a possible implementation, the to-be-detected image includes a plurality of first regions, and the plurality of first regions are consecutively arranged in a horizontal direction.

Optionally, one first region has at least one side adjacent to another first region. For example, as shown in FIG. 5, a plurality of first regions are consecutively arranged in a horizontal direction. In this way, impact of the first region of the to-be-detected image on an energy value of an adjacent second region in a vertical direction can be detected, to obtain definition of the to-be-detected image.

In a possible implementation, the to-be-detected image includes a plurality of first regions, and the plurality of first regions are consecutively arranged in a vertical direction. Optionally, one first region has at least one side adjacent to another first region. For example, as shown in FIG. 6, a plurality of first regions are consecutively arranged in a vertical direction. In this way, impact of the first region of the to-be-detected image on an energy value of an adjacent second region in a horizontal direction can be detected, to obtain definition of the to-be-detected image.

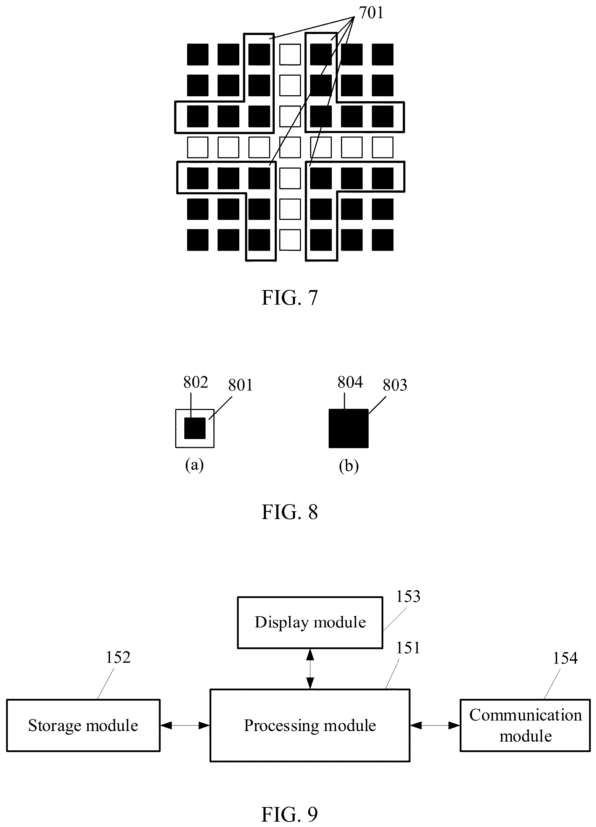

In a possible implementation, the to-be-detected image includes a plurality of first regions, and the plurality of first regions are arranged in a cross shape. Optionally, one first region has at least one side adjacent to another first region. For example, as shown in FIG. 7, a plurality of first regions are arranged in a cross shape. In this way, impact of the first region of the to-be-detected image on an energy value of an adjacent second region in a vertical direction and a horizontal direction can be detected, to obtain definition of the to-be-detected image.

In a possible implementation, that the first energy value and the second energy value are used to calculate the first parameter of the to-be-detected image includes: A second parameter and the second energy value are used to calculate the first parameter of the to-be-detected image, where the second parameter includes at least one of the following: an average value, a weighted average value, and a median of a plurality of first energy values. This reduces an error of the second parameter, and improves accuracy of a calculation result.

In a possible implementation, that the first energy value, the second energy value, and the third energy value are used to calculate the first parameter of the to-be-detected image includes: A second parameter, the second energy value, and the third energy value are used to calculate the first parameter of the to-be-detected image, where the second parameter includes at least one of the following: an average value, a weighted average value, and a median of a plurality of first energy values. This reduces an error of the second parameter, eliminates the impact of the background light, and improves accuracy of a calculation result.

In a possible implementation, that the first energy value and the second energy value are used to calculate the first parameter of the to-be-detected image includes: The first energy value and a third parameter are used to calculate the first parameter of the to-be-detected image, where the third parameter includes at least one of the following: an average value, a weighted average value, and a median of a plurality of second energy values. This reduces an error of the third parameter, and improves accuracy of a calculation result.

In a possible implementation, that the first energy value, the second energy value, and the third energy value are used to calculate the first parameter of the to-be-detected image includes: The first energy value, a third parameter, and the third energy value are used to calculate the first parameter of the to-be-detected image, where the third parameter includes at least one of the following: an average value, a weighted average value, and a median of a plurality of second energy values. This reduces an error of the third parameter, eliminates the impact of the background light, and improves accuracy of a calculation result.

In a possible implementation, the first parameter includes an optical modulation transfer function MTF or a contrast transfer function CTF.

In a possible implementation, that the first energy value and the second energy value are used to calculate the first parameter of the to-be-detected image includes: The first parameter includes a first horizontal parameter and a first vertical parameter; the first horizontal parameter is obtained through calculation based on a second horizontal parameter and a third horizontal parameter; the second horizontal parameter includes second parameters of the plurality of first regions that are consecutively arranged in the horizontal direction; the third horizontal parameter includes third parameters of the plurality of second regions that are consecutively arranged in the horizontal direction; the first horizontal and vertical are calculated based on a second vertical parameter and a third vertical parameter; the second vertical parameter includes second parameters of the plurality of first regions that are consecutively arranged in the vertical direction; and the third vertical parameter includes third parameters of a plurality of second regions that are consecutively arranged in the vertical direction. In this way, definition in the horizontal direction and definition in the vertical direction of the to-be-detected image can be obtained through calculation, further improving the accuracy of the calculation result.

In a possible implementation, that the first energy value, the second energy value, and the third energy value are used to calculate the first parameter of the to-be-detected image includes: The first parameter includes a first horizontal parameter and a first vertical parameter; the first horizontal parameter is obtained through calculation based on a second horizontal parameter, a third horizontal parameter, and the third energy value; the second horizontal parameter includes second parameters of the plurality of first regions that are consecutively arranged in the horizontal direction; the third horizontal parameter includes third parameters of the plurality of second regions that are consecutively arranged in the horizontal direction; the first horizontal and vertical are calculated based on a second vertical parameter, a third vertical parameter, and the third energy value; the second vertical parameter includes second parameters of the plurality of first regions that are consecutively arranged in the vertical direction; and the third vertical parameter includes third parameters of a plurality of second regions that are consecutively arranged in the vertical direction. In this way, definition in the horizontal direction and definition in the vertical direction of the to-be-detected image can be obtained through calculation, and the impact of the background light is eliminated, further improving the accuracy of the calculation result.

In a possible implementation, the method further includes: The first color is white, and the second color is black. The white first region has most significant impact on the energy value of the black second region, a result obtained through calculation is more representative, and a calculation process is simpler.

According to a second aspect, this application provides a detection apparatus, configured to detect resolving power of a projection device. The detection apparatus includes a receiving screen and an energy detector. The projection device is configured to project a to-be-detected image, where the to-be-detected image includes at least one first region and at least one second region, the first region is a single-pixel projection region of a first color, and the second region is a single-pixel projection region of a second color adjacent to the first region. The receiving screen is configured to receive and display the to-be-detected image. The energy detector is configured to obtain a first energy value of the first region and a second energy value of the second region of the to-be-detected image. The first energy value and the second energy value are used to calculate a first parameter of the to-be-detected image, where the first parameter indicates definition of the to-be-detected image.

In a possible implementation, the energy detector is further configured to obtain a third energy value, where the third energy value is a background light energy value of a detection environment; and the first energy value, the second energy value, and the third energy value are used to calculate the first parameter of the to-be-detected image.

In a possible implementation, the energy detector includes at least one of a luminance meter and an optical power meter.

Optionally, the energy detector may alternatively be another apparatus that can detect an energy value of a pixel. This is not specifically limited in this embodiment of this application.

In a possible implementation, that the energy detector is configured to obtain the first energy value of the first region and the second energy value of the second region of the to-be-detected image includes: The energy detector includes a light inlet hole, where the light inlet hole is configured to detect the first energy value of the first region and the second energy value of the second region of the to-be-detected image, and a region of the light inlet hole is less than or equal to a display region in which a single pixel in the to-be-detected image is projected onto the receiving screen.

For example, as shown in (a) in FIG. 8, a display region in which a single pixel in a to-be-detected image is projected onto a receiving screen may be a region 801, a region of a light inlet hole may be a region 802, and the region 802 is less than the region 801. Alternatively, as shown in (b) in FIG. 8, a display region in which a single pixel in a to-be-detected image is projected onto a receiving screen may be a region 803, a region of a light inlet hole may be a region 804, and the region 802 overlaps the region 801. In this way, the energy detector may detect an energy value of a pixel through the light inlet hole.

In a possible implementation, the apparatus further includes a translation stage. The translation stage is configured to fasten the projection device, or the translation stage is configured to fasten the energy detector; the translation stage includes at least a first axis and a second axis; and the first axis and the second axis are coplanar and not parallel to each other. In this way, the translation stage may control the projection device or the energy detector to move in a direction of the first axis or a direction of the second axis, to detect energy values of a plurality of pixels.

In a possible implementation, the first axis is perpendicular to the second axis. In this way, the translation stage may control the projection device or the energy detector to move in the horizontal direction and the vertical direction, to detect energy values of a plurality of pixels.

In a possible implementation, the translation stage further includes a third axis, and the third axis is perpendicular to a plane in which the first axis and the second axis are located. In this way, the translation stage may control the projection device or the energy detector to move forward and backward, to determine an appropriate location for detection, control a plane of the light inlet hole of the energy detector to move to a location parallel to a plane of the receiving screen, or control a region of a single pixel in the to-be-detected image to be less than a region of the light inlet hole of the energy detector.

In a possible implementation, the apparatus further includes a terminal device. The terminal device is configured to connect to and control the translation stage to move in a direction of the first axis or a direction of the second axis. The terminal device is further configured to: connect to the energy detector, receive the first energy value, the second energy value, and the third energy value that are obtained from the energy detector, and calculate the first parameter of the to-be-detected image based on the first energy value, the second energy value, and the third energy value.

In a possible implementation, the terminal device is further configured to: connect to the projection device, and control the projection device to project the to-be-detected image.

According to a third aspect, this application provides an energy detector, including: The energy detector is configured to obtain a first energy value of a first region and a second energy value of a second region of a to-be-detected image, where the first region is a single-pixel projection region of a first color, the second region is a single-pixel projection region of a second color adjacent to the first region, the to-be-detected image includes at least one first region and at least one second region, and the first energy value and the second energy value are used to calculate a first parameter of the to-be-detected image, where the first parameter indicates definition of the to-be-detected image.

In a possible implementation, the energy detector is further configured to obtain a third energy value, where the third energy value is a background light energy value of a detection environment; and the first energy value, the second energy value, and the third energy value are used to calculate the first parameter of the to-be-detected image.

According to a fourth aspect, this application provides a terminal device, including: obtaining a first energy value and a second energy value, where the first energy value includes an energy value of a first region of a to-be-detected image, the second energy value includes an energy value of a second region of the to-be-detected image, the first region is a single-pixel projection region of a first color, the second region is a single-pixel projection region of a second color adjacent to the first region, and the to-be-detected image includes at least one first region and at least one second region; and calculating a first parameter of the to-be-detected image based on the first energy value and the second energy value, where the first parameter indicates definition of the to-be-detected image.

In a possible implementation, the terminal device further includes: obtaining a third energy value, where the third energy value is a background light energy value of a detection environment; and calculating the first parameter of the to-be-detected image based on the first energy value, the second energy value, and the third energy value.

According to a fifth aspect, this application provides a computer-readable storage medium. The computer-readable storage medium includes a computer program or instructions, and when the computer program or the instructions are run on a service processing apparatus, the service processing apparatus is enabled to perform the method according to the first aspect.

According to a sixth aspect, this application provides a chip system, including at least one processor and at least one interface circuit. The at least one interface circuit is configured to: perform a transceiver function, and send instructions to the at least one processor. When the at least one processor executes the instructions, the at least one processor performs the method according to any implementation of the first aspect.

According to a seventh aspect, this application further provides a computer program product, including instructions. When the instructions are run on a computer, the computer is enabled to perform the method according to any implementation of the first aspect.

According to an eighth aspect, an embodiment of this application provides a circuit system. The circuit system includes a processing circuit, and the processing circuit is configured to perform the method according to the first aspect or any one of the implementations of the first aspect.

According to a ninth aspect, an embodiment of this application provides an electronic device, including a processor and a memory, where the memory is coupled to the processor, the memory is configured to store computer program code, the computer program code includes computer instructions, and when the processor reads the computer instructions from the memory, the electronic device performs the method according to the first aspect or any one of the implementations of the first aspect.

For technical effects corresponding to the third aspect to the ninth aspect and any one of the implementations of the third aspect to the ninth aspect, correspondingly refer to the technical effects corresponding to the first aspect and the second aspect and any one of the implementations of the first aspect and the second aspect. Details are not described herein again.

### BRIEF DESCRIPTION OF DRAWINGS

FIG. 1 is a diagram of a structure of a detection system according to an embodiment of this application;
FIG. 2 is a diagram of a structure of an electronic device according to an embodiment of this application;
FIG. 3 is a flowchart of a detection method according to an embodiment of this application;
FIG. 4 is a diagram of a pixel arrangement according to an embodiment of this application;
FIG. 5 is a diagram of another pixel arrangement according to an embodiment of this application;
FIG. 6 is a diagram of another pixel arrangement according to an embodiment of this application;
FIG. 7 is a diagram of another pixel arrangement according to an embodiment of this application;
FIG. 8 is diagrams of sizes of pixel regions and light inlet hole regions according to an embodiment of this application;
FIG. 9 is a diagram of a structure of an electronic device apparatus according to an embodiment of this application; and
FIG. 10 is a diagram of a structure of a chip system according to an embodiment of this application.

### DESCRIPTION OF EMBODIMENTS

Terms "including", "having", and any other variant thereof mentioned in descriptions of embodiments of this application are intended to cover a non-exclusive inclusion. For example, a process, a method, a system, a product, or a device that includes a series of steps or units is not limited to the listed steps or units, but optionally further includes other unlisted steps or units, or optionally further includes another inherent step or unit of the process, the method, the product, or the device.

It should be noted that, in embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design scheme. Exactly, use of the word such as "example" or "for example" is intended to present a related concept in a specific manner.

In descriptions of embodiments of this application, unless otherwise stated, "plurality of" means two or more. A term "and/or" in this specification describes only an association relationship between associated objects and indicates that there may be three relationships. For example, A and/or B may represent the following three cases: Only A exists, both A and B exist, and only B exists.

In a production process of a projection device, resolving power of the produced projection device needs to be detected, and key optical elements of the projection device need to be adjusted to improve the resolving power of the projection device, so that definition of an image projected by the projection device meets a requirement.

In some scenarios, after the projection device projects an image, production personnel observe definition of the image through visual inspection, and adjust the key optical elements of the projection device to improve the definition of the image. However, this manner relies on work experience of the production personnel, increasing labor costs. In addition, determining of the definition of the image by human eyes is highly subjective. As a result, the definition of the image cannot be accurately determined, leading to an inaccurate detection result.

Alternatively, the image projected by the projection device is detected by using a camera, to obtain the definition of the image. For example, in the patent CN110261069A, an image of a test chart imaged by a to-be-measured lens is obtained, a detection region of the obtained image includes a plurality of black-and-white line pairs, and the plurality of black-and-white line pairs have a same frequency; and a definition value of the detection region is calculated. However, in this method, only an optical imaging lens can be monitored, and an optical imaging device like a camera needs to be used, which causes a system error and complex calculation.

For example, in the patent CN110864880A, a reference value is first obtained by attaching an opaque film to a camera, and then the film is removed. A black picture is projected by the camera by using a projector, to obtain a detection value, and a correction value is calculated according to a normalization formula, to obtain definition of the projector. However, this measurement method has a complex operation process and high costs, occupies large space, and requires the camera to obtain a picture, which is greatly affected by an environment.

To resolve the foregoing technical problems, an embodiment of this application provides a detection method. In the method, energy values of pixels of different color regions of a to-be-detected image can be detected by using an energy detector, and a first parameter of the to-be-detected image is obtained through calculation. The first parameter may indicate definition of the to-be-detected image.

In this way, more accurate definition of the projected to-be-detected image can be obtained. This helps production personnel adjust key optical elements of a projection device based on the definition of the to-be-detected image, to obtain a clearer to-be-detected image.

An energy value of a pixel indicates an energy value of each pixel in the to-be-detected image, and may indicate luminance, saturation, or color intensity of the pixel.

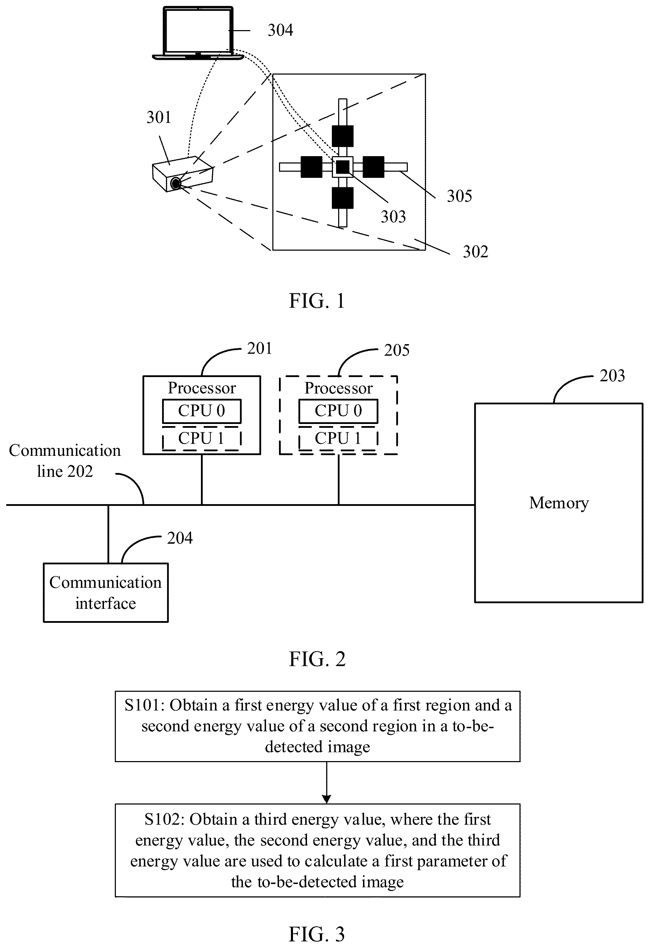

FIG. 1 is a diagram of a structure of a detection system according to an embodiment of this application. The system includes a projection device 301, a receiving screen 302, and an energy detector 303. Optionally, the system may further include a terminal device 304 and a translation stage 305.

Optionally, the projection device 301 is configured to project a to-be-detected image onto the receiving screen 302, and the projection device 301 is further configured to be fastened to the translation stage 305. Optionally, the projection device 301 may be, but is not limited to, a projector, or may be a projection television, a shooting camera that can perform projection, or the like.

The receiving screen 302 is configured to receive and display the to-be-detected image from the projection device 301. In some examples, the receiving screen 302 may be a screen implemented by hardware. In some examples, the projection device 301 may project light onto a surface of an object, to form a projected image. For example, the projection device 301 may project light onto a smooth wall, to form a projected image. In this example, the wall may be considered as the receiving screen 302. This is not limited in embodiments of this application.

The energy detector 303 is configured to detect an energy value of a pixel in the to-be-detected image. The energy detector 303 is further configured to detect a background light energy value. The energy detector 303 is further configured to send the detected energy value of the pixel in the to-be-detected image and the background light energy value to the terminal device 304. The energy detector 303 is further configured to be fastened to the translation stage 305.

The terminal device 304 is configured to: receive the energy value of the pixel in the to-be-detected image and the background light energy value from the energy detector 303, send the energy value of the pixel and the background light energy value to the terminal device 304, and calculate a first parameter of the to-be-detected image based on the energy value of the pixel in the to-be-detected image and the background light energy value, where the first parameter may indicate definition of the to-be-detected image. The terminal device 304 is further configured to connect and control the translation stage 305 to move.

Optionally, the terminal device 304 in embodiments of this application may be a terminal device, for example, a personal computer (personal computer, PC), a mobile phone (mobile phone), a tablet computer (Pad), a notebook computer, a desktop computer, a notebook computer, a computer with a transceiver function, a virtual reality (virtual reality, VR) terminal device, an augmented reality (augmented reality, AR) terminal device, a wireless terminal in industrial control (industrial control), a wireless terminal in self-driving (self driving), a wireless terminal in telemedicine (remote medical), a wireless terminal in a smart grid (smart grid), a wireless terminal in transportation safety (transportation safety), a wireless terminal in a smart city (smart city), a gateway in a smart home (smart home), an access point (access point) device, a home device, a wearable device, or a vehicle-mounted device. A specific form of the terminal device is not specifically limited in embodiments of this application.

The translation stage 305 is configured to fasten the projection device 301 or the energy detector 303.

FIG. 2 is a diagram of a hardware structure of an electronic device according to an embodiment of this application. The electronic device includes at least one processor 201, a communication line 202, a memory 203, and at least one communication interface 204. The memory 203 may alternatively be included in the processor 201.

The processor 201 may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The communication line 202 may include a path on which information is transferred between the foregoing components.

The communication interface 204 is configured to communicate with another device. In embodiments of this application, the communication interface may be a module, a circuit, a bus, an interface, a transceiver, or another apparatus that can implement a communication function, and is configured to communicate with another device. Optionally, when the communication interface is a transceiver, the transceiver may be an independently disposed transmitter, and the transmitter may be configured to send information to the another device. Alternatively, the transceiver may be an independently disposed receiver, and is configured to receive information from the another device. Alternatively, the transceiver may be a component that integrates functions of sending and receiving information. Specific implementation of the transceiver is not limited in embodiments of this application.

The memory 203 may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM), or another magnetic storage device, or any other medium that can be configured to carry or store expected program code in a form of an instruction or a data structure and that can be accessed by a computer. However, this is not limited thereto. The memory may exist independently, and is connected to the processor 201 through the communication line 202. The memory 203 may alternatively be integrated with the processor 201.

The memory 203 is configured to store computer-executable instructions for implementing the solutions of this application, and the processor 201 controls the execution. The processor 201 is configured to execute the computer-executable instructions stored in the memory 203, to implement a detection method provided in the following embodiment of this application.

Optionally, the computer-executable instructions in embodiments of this application may also be referred to as application program code, instructions, a computer program, or another name. This is not specifically limited in embodiments of this application.

During specific implementation, in an embodiment, the processor 201 may include one or more CPUs, for example, a CPU 0 and a CPU 1 in FIG. 2.

During specific implementation, in an embodiment, the electronic device may include a plurality of processors, for example, the processor 201 and a processor 205 in FIG. 2. Each of the processors may be a single-core (single-CPU) processor, or a multi-core (multi-CPU) processor. The processor herein may be one or more devices, circuits, and/or processing cores configured to process data (for example, computer program instructions).

The electronic device may be a general-purpose device or a dedicated device. A type of the electronic device is not limited in embodiments of this application.

It may be understood that a structure shown in this embodiment of this application does not constitute a specific limitation on the first electronic device. In some other embodiments of this application, the first electronic device may include more or fewer components than those shown in the figure, or a combination of some components, or splits from some components, or a different component layout. The components shown in the figure may be implemented by hardware, software, or a combination of software and hardware.

FIG. 3 is a detection method according to an embodiment of this application. The detection method includes steps S101 and S102.

S101: An energy detection apparatus obtains a first energy value of a first region and a second energy value of a second region of a to-be-detected image.

The to-be-detected image includes at least one first region and at least one second region. The first region is a single-pixel projection region of a first color, and the second region is a single-pixel projection region of a second color adjacent to the first region.

Optionally, the first color may be white, and the second color may be black. Alternatively, the first color is black, and the second color is white. Alternatively, the first color and the second color may be other different colors. This is not specifically limited in this embodiment of this application.

Optionally, in this embodiment of this application, an example in which the first color is white and the second color is black is used for description.

Optionally, definition of the to-be-detected image may be determined based on a magnitude of impact of an energy value of a white pixel on an energy value of an adjacent black pixel, to determine projection quality of a projection device.

As shown in FIG. 4, a first region is a white single-pixel projection region 401, and a second region is a single-pixel projection region 402 of a second color adjacent to the first region, or a single-pixel projection region 403, or a single-pixel projection region 404, or a single-pixel projection region 405.

Optionally, the to-be-detected image may include a plurality of first regions, and the plurality of first regions are consecutively arranged in a horizontal direction. Optionally, one first region has at least one side adjacent to another first region.

For example, as shown in FIG. 5, the to-be-detected image includes four white first regions, and the four white first regions are consecutively arranged in the horizontal direction. The second region may be six black second regions in a solid line box 501.

Optionally, the to-be-detected image may include a plurality of first regions, and the plurality of first regions are consecutively arranged in a vertical direction. Optionally, one first region has at least one side adjacent to another first region.

For example, as shown in FIG. 6, the to-be-detected image includes four white first regions, and the four white first regions are consecutively arranged in the vertical direction. The second region may be six black second regions in a solid line box 601.

Optionally, the to-be-detected image may include a plurality of first regions, and the plurality of first regions are arranged in a cross shape. Optionally, one first region has at least one side adjacent to another first region.

For example, as shown in FIG. 7, the to-be-detected image includes 13 white first regions, and the 13 white first regions are arranged in a cross shape. In this case, the second region may be 20 black second regions in a solid line box 701.

Optionally, the to-be-detected image may include a plurality of first regions, and the plurality of first regions may be alternatively arranged in another manner. This is not specifically limited in this embodiment of this application.

Optionally, a pixel of the to-be-detected image may be a square, a triangle, a hexagon, or the like. This is not specifically limited in this embodiment of this application.

Optionally, the energy detection apparatus may be an apparatus that can detect an energy value of a pixel, like a luminance meter or an optical power meter, and includes a light inlet hole. The energy detection apparatus may detect the energy value of the pixel through the light inlet hole. A specific type of the energy detector is not limited in this embodiment of this application.

Optionally, the energy detector may be fastened to a translation stage, the translation stage includes a first axis and a second axis; and the first axis and the second axis are coplanar and not parallel to each other.

Optionally, when the projection device is fixed, the translation stage may be controlled to move in a direction of the first axis or a direction of the second axis, to control the energy detector to move to detect energy values of pixels in the first region and the second region.

Optionally, the first axis may be perpendicular to the second axis. In this way, when the energy detector moves in the direction of the first axis, the energy detector may detect an energy value of a pixel in the direction of the first axis; and when the energy detector moves in the direction of the second axis, the energy detector may detect an energy value of a pixel in the direction of the second axis.

For example, the first axis may be the horizontal direction, and the second axis may be the vertical direction. When the energy detector moves in the direction of the first axis, the energy detector may detect a horizontal energy value of a pixel in the horizontal direction; and when the energy detector moves in the direction of the second axis, the energy detector may detect a vertical energy value of a pixel in the vertical direction.

Optionally, the translation stage may further include a third axis, and the third axis is perpendicular to a plane in which the first axis and the second axis are located. In this way, the translation stage may move forward and backward, to control a plane of the light inlet hole of the energy detector to move to a location parallel to a plane of the receiving screen.

Optionally, the projection device may alternatively be fastened to the translation stage. When the energy detector is fixed, the translation stage may be controlled to move along the first axis or the second axis, to control the projection device to move, so that the energy detector detects the pixels in the first region and the second region.

Optionally, the translation stage may further control the projection device to move forward and backward to an appropriate location along the third axis, to project a to-be-detected image of an appropriate size. For example, a region of a single pixel in the to-be-detected image is controlled to be less than a region of the light inlet hole of the energy detector.

Optionally, the translation stage may be further connected to a terminal device. The terminal device may accurately control a moving distance of the translation stage, to ensure that the translation stage moves by one pixel each time.

Optionally, the terminal device may further control the translation stage to move, so that the light inlet hole of the energy detector is located at a central location of a to-be-measured pixel.

Optionally, an energy detection apparatus may obtain the first energy value of the first region and the second energy value of the second region of the to-be-detected image through the light inlet hole.

The projection device projects the to-be-detected image onto the light inlet hole of the energy detector, and the light inlet hole may receive light of a pixel projected by the projection device, to further obtain an energy value of a corresponding pixel through analysis.

Optionally, the light inlet hole of the energy detector is placed on a plane parallel to the receiving screen, and the energy detector is moved to detect the first energy value of the first region and the second energy value of the second region of the to-be-detected image.

The region of the light inlet hole is less than or equal to a display region in which a single pixel in the to-be-detected image is projected onto the receiving screen. For example, as shown in (a) in FIG. 8, the display region in which the single pixel in the to-be-detected image is projected onto the receiving screen may be a region 801, the region of the light inlet hole may be a region 802, and the region 802 is less than the region 801. Alternatively, as shown in (b) in FIG. 8, the display region in which the single pixel in the to-be-detected image is projected onto the receiving screen may be a region 803, the region of the light inlet hole may be a region 804, and the region 802 overlaps the region 801.

For example, as shown in FIG. 4, a first energy value Ew1 of a first region 401 in the to-be-detected image is 250. A second energy value Ed1 of a second region 402 is 16, a second energy value Ed2 of a second region 403 is 16, a second energy value Ed3 of a second region 404 is 14, and a second energy value Ed4 of a second region 405 is 20. The first energy value of the first region 401 may be a first horizontal energy value (namely, an energy value obtained when the at least one first region is horizontally arranged), or may be a first vertical energy value (namely, an energy value obtained when the at least one first region is vertically arranged). The second energy value of the second region 402 and the second energy value of the second region 404 may be second horizontal energy values. The second energy value of the second region 403 and the second energy value of the second region 405 may be second vertical energy values.

Optionally, the energy detector may further detect energy values of a plurality of first regions and a plurality of second regions shown in FIG. 5 to FIG. 7. Details are not described in this embodiment of this application.

Optionally, the first energy value and the second energy value are used to calculate a first parameter of the to-be-detected image, where the first parameter indicates definition of the to-be-detected image.

Optionally, the energy detector may send the first energy value and the second energy value to the terminal device, and the terminal device calculates the first parameter of the to-be-detected image based on the first energy value and the second energy value.

In an embodiment, the first parameter may be a contrast transfer function (contrast transfer function, CTF), where the CTF may indicate the definition of the to-be-detected image. A higher CTF indicates higher definition of the to-be-detected image.

Optionally, the first parameter may include a first horizontal parameter and a first vertical parameter. The first horizontal parameter may be a horizontal CTF, and the first vertical parameter may be a vertical CTF.

Optionally, the horizontal CTF may be obtained through calculation based on a second horizontal parameter Ewx and a third horizontal parameter Edx.

Optionally, the second horizontal parameter Ewx includes second parameters of the plurality of first regions that are consecutively arranged in the horizontal direction, where the second parameter includes at least one of the following: an average value, a weighted average value, and a median of a plurality of first energy values. Optionally, in this embodiment of this application, an example in which the second parameter is the average value of the plurality of first energy values is used for description.

Optionally, the third horizontal parameter Edx includes third parameters of a plurality of second regions that are consecutively arranged in the vertical direction, where the third parameter includes at least one of the following: an average value, a weighted average value, and a median of a plurality of second energy values. Optionally, in this embodiment of this application, an example in which the third parameter is the average value of the plurality of second energy values is used for description.

For example, as shown in FIG. 4, the to-be-detected image includes one horizontal first region 401 and two horizontal second regions 402 and 404.

The second horizontal parameter Ewx may be the average value of the first energy values of the plurality of first regions that are consecutively arranged in the horizontal direction. For example, the second horizontal parameter Ewx may be an average value 250 of first energy values of the first region 401. The third horizontal parameter Edx may be an average value of the second energy values of the plurality of second regions that are consecutively arranged in the vertical direction. For example, the third horizontal parameter Edx may be an average value 16 of first energy values of the second region 402. For another example, the third horizontal parameter Edx may be an average value 14 of first energy values of the second region 404. For another example, the third horizontal parameter Edx may be an average value of the first energy values of the second regions 402 and 404, that is, (16+14)/2=15. In this embodiment of this application, an example in which the third horizontal parameter Edx is 15 is used for description.

Optionally, the horizontal CTF may be (Ewx-Edx)/(Ewx+Edx)=(250-15)/(250+15)=0.89.

Optionally, the vertical CTF may also be obtained through calculation by using the foregoing method. Specifically, the vertical CTF may be obtained through calculation based on a second vertical parameter Ewy and a third vertical parameter Edy.

For example, as shown in FIG. 4, the to-be-detected image includes one vertical first region 401 and two vertical second regions 403 and 405. The second vertical parameter Ewy may be the average value of the first energy values of the plurality of first regions that are consecutively arranged in the horizontal direction. For example, the second vertical parameter Ewy may be an average value 250 of first energy values of the first region 401. The third vertical parameter Edy may be an average value of the second energy values of the plurality of second regions that are consecutively arranged in the vertical direction. For example, the third vertical parameter Edy may be an average value 16 of first energy values of the second region 403. For another example, the third vertical parameter Edy may be an average value 20 of first energy values of the second region 405. For another example, the third vertical parameter Edy may be an average value of the first energy values of the second regions 403 and 405, that is, (16+20)/2=18. In this embodiment of this application, an example in which the third horizontal parameter Edy is 18 is used for description.

The vertical CTF may be (Ewy-Edy)/(Ewy+Edy)=(250-18)/(250+18)=0.87.

In other words, the first parameter may be the first horizontal parameter 0.89 and the first vertical parameter 0.87. For a location in the to-be-detected image, definition in the horizontal direction is higher than definition in the vertical direction.

Optionally, the first region and the second region shown in FIG. 4 may be located at a central location of the to-be-detected image. In this case, definition of a central region of the to-be-detected image may be detected. Alternatively, the first region and the second region may be located at other locations (for example, an edge region) of the to-be-detected image. In this case, definition of the another region of the to-be-detected image may be detected. In this way, definition of all regions of the to-be-detected image is obtained.

In another embodiment, the first parameter may alternatively be an optical modulation transfer function (modulation transfer function, MTF), where the MTF may indicate the definition of the to-be-detected image. A higher MTF indicates higher definition of the to-be-detected image.

Optionally, the first parameter may include a first horizontal parameter and a first vertical parameter. The first horizontal parameter may be a horizontal MTF, and the first vertical parameter may be a vertical MTF.

Optionally, the terminal device may obtain the MTF through calculation based on the CTF. Specifically, the horizontal MTF≈pi/4xhorizontal CTF=3.14/4×0.89=0.7, and the vertical MTF≈pi/4×vertical CTF=3.14/4×0.87=0.68.

In other words, the first parameter may be the first horizontal parameter 0.7 and the first vertical parameter 0.68. For a location in the to-be-detected image, definition in the horizontal direction is higher than definition in the vertical direction.

Optionally, the terminal device may calculate a CTF or an MTF of the to-be-detected image shown in FIG. 5 to FIG. 7, to obtain definition of a corresponding location in the to-be-detected image. Details are not described in this embodiment of this application.

This can simply and efficiently obtain a definition value of the to-be-detected image, to further quantitatively obtain a projection quality value of a projection device, resulting in a simple operation, low costs, and a small error.

In an embodiment, this embodiment of this application may include step S102.

S102: The energy detector obtains a third energy value, where the first energy value, the second energy value, and the third energy value are used to calculate the first parameter of the to-be-detected image.

The third energy value is a background light energy value of a detection environment. Specifically, in a dark room detection environment, a background light energy value Ebk of the detection environment may be detected by using the energy detector. Optionally, a background light energy value may be further detected in another detection environment. This is not specifically limited in this embodiment of this application.

Optionally, the energy detector may send the first energy value, the second energy value, and the third energy value to the terminal device, and the terminal device calculates the first parameter of the to-be-detected image based on the first energy value, the second energy value, and the third energy value.

In an embodiment, the first parameter may be a contrast transfer function (contrast transfer function, CTF), where the CTF may indicate the definition of the to-be-detected image. A higher CTF indicates higher definition of the to-be-detected image.

Optionally, the first parameter may include a first horizontal parameter and a first vertical parameter. The first horizontal parameter may be a horizontal CTF, and the first vertical parameter may be a vertical CTF.

Optionally, the horizontal CTF may be obtained through calculation based on the second horizontal parameter Ewx, the third horizontal parameter Edx, and a third energy value Ebk.

Optionally, the second horizontal parameter Ewx and the third horizontal parameter Edx include impact of background light, and a difference between the second horizontal parameter Edx and the third energy value Ebk and a difference between the third horizontal parameter Edx and the third energy value Ebk may be calculated, to eliminate the impact of the background light. For example, a third energy value Ebk may be 2.

Specifically, a second horizontal parameter with eliminated impact of the background light Ewx'=Ewx-Ebk=250-2=248; and a third horizontal parameter with eliminated impact of the background light Edx'=Edx-Ebk=15-2=13.

Optionally, the horizontal CTF may be (Ewx'-Edx')/(Ewx'+Edx')=(248-13)/(248+13)=0.9.

Optionally, the vertical CTF may also be obtained through calculation by using the foregoing method. Specifically, the vertical CTF may be obtained through calculation based on the second vertical parameter Ewy, the third vertical parameter Edy, and the third energy value Ebk.

For example, as shown in FIG. 4, the to-be-detected image includes one vertical first region 401 and two vertical second regions 403 and 405. The second vertical parameter Ewy may be the average value of the first energy values of the plurality of first regions that are consecutively arranged in the horizontal direction. For example, the second vertical parameter Ewy may be an average value 250 of first energy values of the first region 401. The third vertical parameter Edy may be an average value of the second energy values of the plurality of second regions that are consecutively arranged in the vertical direction. For example, the third vertical parameter Edy may be an average value 16 of first energy values of the second region 403. For example, the third vertical parameter Edy may be an average value 20 of first energy values of the second region 405. For another example, the third vertical parameter Edy may be an average value of the first energy values of the second regions 403 and 405, that is, (16+20)/2=18. In this embodiment of this application, an example in which the third horizontal parameter Edy is 18 is used for description.

A second vertical parameter with eliminated impact of the background light Ewy'=Ewy-Ebk=250-2=248; and a third vertical parameter with eliminated impact of the background light Edy'=Edy-Ebk=18-2=16. In this case, the vertical CTF may be (Ewy'-Edy')/(Ewy'+Edy')=(248-16)/(248+16)=0.88.

In other words, the first parameter may be the first horizontal parameter 0.9 and the first vertical parameter 0.88. For a location in the to-be-detected image, definition in the horizontal direction is higher than definition in the vertical direction.

Optionally, the first region and the second region shown in FIG. 4 may be located at a central location of the to-be-detected image. In this case, definition of a central region of the to-be-detected image may be detected. Alternatively, the first region and the second region may be located at other locations (for example, an edge region) of the to-be-detected image. In this case, definition of the another region of the to-be-detected image may be detected. In this way, definition of all regions of the to-be-detected image is obtained.

In another embodiment, the first parameter may alternatively be an optical modulation transfer function (modulation transfer function, MTF), where the MTF may indicate the definition of the to-be-detected image. A higher MTF indicates higher definition of the to-be-detected image.

Optionally, the first parameter may include a first horizontal parameter and a first vertical parameter. The first horizontal parameter may be a horizontal MTF, and the first vertical parameter may be a vertical MTF.

Optionally, the terminal device may obtain the MTF through calculation based on the CTF. Specifically, the horizontal MTF≈pi/4×horizontal CTF=3.14/4×0.9=0.71, and the vertical MTF≈pi/4×vertical CTF=3.14/4×0.88=0.69.

In other words, the first parameter may be the first horizontal parameter 0.71 and the first vertical parameter 0.69. For a location in the to-be-detected image, definition in the horizontal direction is higher than definition in the vertical direction.

Optionally, the terminal device may calculate a CTF or an MTF of the to-be-detected image shown in FIG. 5 to FIG. 7, to obtain definition of a corresponding location in the to-be-detected image. Details are not described in this embodiment of this application.

In this way, the impact of the background light is eliminated, to obtain a more accurate definition value of the to-be-detected image, and further quantitatively obtain the projection quality value of the projection device.

It should be understood that some operations in procedures of the foregoing method embodiments are randomly combined, and/or a sequence of some operations is randomly changed. In addition, an execution sequence between steps of each process is merely an example, and does not constitute a limitation on an execution sequence between the steps. The steps may alternatively be performed in another execution sequence. It is not intended to indicate that the execution sequence is an only sequence in which these operations can be performed. A person of ordinary skill in the art may figure out a plurality of manners to reorder the operations described in this specification. In addition, it should be noted that process details related to a specific embodiment in this specification are also applicable to another embodiment in a similar manner, or different embodiments may be used in combination.

In addition, some steps in the method embodiments may be equivalently replaced with other possible steps. Alternatively, some steps in the method embodiments may be optional, and may be deleted in some use scenarios. Alternatively, another possible step may be added to the method embodiments.

In addition, the foregoing method embodiments may be implemented separately or in combination.

Some other embodiments of this application provide an apparatus. The apparatus may be the electronic device or a component (for example, a chip system) in the electronic device.

The apparatus may include a display, a memory, and one or more processors. The display and the memory are coupled to the processor. The memory is configured to store computer program code. The computer program code includes computer instructions. When the processor executes computer instructions, the electronic device may perform functions or steps performed by the mobile phone in the foregoing method embodiments.

A core structure of the electronic device may be represented as a structure shown in FIG. 9. The electronic device includes a processing module 151, a storage module 152, a display module 153, and a communication module 154.

The processing module 151 may include at least one of a central processing unit (CPU), an application processor (Application Processor, AP), or a communication processor (Communication Processor, CP). The processing module 151 may perform an operation or data processing related to control and/or communication of at least one of other elements of a user electronic device. Optionally, the processing module 151 is configured to support the electronic device in calculating a first parameter of a to-be-detected image based on a first energy value, a second energy value, and a third energy value.

The storage module 152 may include a volatile memory and/or a non-volatile memory. The storage module is configured to store instructions or data related to at least one of other modules of a user terminal device. Optionally, the storage module 152 is configured to store the first energy value, the second energy value, the third energy value, and the first parameter by the electronic device 10.

The display module 153 may include, for example, a liquid crystal display (LCD), a light-emitting diode (LED) display, an organic light-emitting diode (OLED) display, a micro-electro-mechanical system (MEMS) display, or an electronic paper display. The display module 153 is configured to display content (for example, a text, an image, a video, an icon, and a symbol) that can be viewed by the user. Optionally, the display module 153 is configured to display a calculation result of the electronic device, for example, the first parameter.

The communication module 154 is configured to support communication between a personal terminal and another personal terminal (through a communication network). For example, the communication module may be connected to a network through wireless communication or wired communication, to communicate with another personal terminal or a network server. The wireless communication may use at least one of cellular communication protocols, such as long term evolution (LTE), long term evolution advanced (LTE-A), code division a plurality of access (CDMA), wideband code division a plurality of access (WCDMA), universal mobile telecommunications system (UMTS), wireless broadband (WiBro), or a global system for mobile communication (GSM). The wireless communication may include, for example, short-range communication. The short-range communication may include at least one of wireless fidelity (Wi-Fi), Bluetooth, near field communication (NFC), magnetic stripe transmission (MST), or GNSS. Optionally, the communication module 154 is configured to support communication between the electronic device and a projection electronic device and/or an energy detector and/or a translation stage.

The apparatus shown in FIG. 9 may further include more or fewer components, or some components may be split, or another component layout may be used. This is not limited in embodiments of this application.

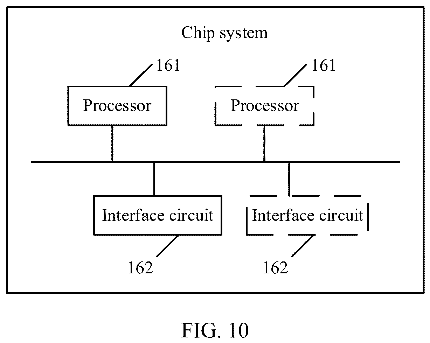

An embodiment of this application further provides a chip system. As shown in FIG. 10, the chip system includes at least one processor 161 and at least one interface circuit 162. The processor 161 and the interface circuit 162 may be interconnected through a line. For example, the interface circuit 162 may be configured to receive a signal from another apparatus (for example, a memory of an electronic device). For another example, the interface circuit 162 may be configured to send a signal to another apparatus (for example, the processor 161). For example, the interface circuit 162 may read instructions stored in a memory, and send the instructions to the processor 161. When the instructions are executed by the processor 161, the electronic device is enabled to perform the steps in the foregoing embodiments. Certainly, the chip system may further include another discrete component. This is not specifically limited in this embodiment of this application.

An embodiment of this application further provides a computer storage medium. The computer storage medium includes computer instructions. When the computer instructions run on the foregoing electronic device, the electronic device is enabled to perform functions or steps performed by the mobile phone in the foregoing method embodiments.

An embodiment of this application further provides a computer program product. When the computer program product runs on a computer, the computer is enabled to perform functions or steps performed by the mobile phone in the foregoing method embodiments.

The foregoing descriptions about implementations allow a person skilled in the art to clearly understand that, for the purpose of convenient and brief description, division of the foregoing functional modules is used as an example for illustration. In actual application, the foregoing functions can be allocated to different functional modules and implemented based on a requirement, that is, an inner structure of an apparatus is divided into different functional modules to implement all or some of the functions described above. For a detailed working process of the foregoing system, apparatus, and module, refer to a corresponding process in the foregoing method embodiments. Details are not described herein again.

In the several embodiments provided in this application, it should be understood that the disclosed apparatus and method may be implemented in other manners. For example, the described apparatus embodiments are merely examples. For example, division into the modules or units is merely logical function division, and may be other division in an actual implementation. For example, a plurality of units or components may be combined or may be integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may be one or more physical units, may be located in one place, or may be distributed in different places. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a readable storage medium. Based on such an understanding, the technical solutions of embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in embodiments of this application. The storage medium includes various media that can store program code, such as a USB flash drive, a removable hard disk, a read-only memory (read-only memory, ROM), a random access memory (random access memory, RAM), a magnetic disk, or an optical disc.

The foregoing descriptions are merely specific implementations of this application, but are not intended to limit the protection scope of this application. Any variation or replacement within the technical scope disclosed in this application shall fall within the protection scope of this application. Therefore, the protection scope of this application shall be subject to the protection scope of the claims.

## Claims

1. A detection method, comprising:
obtaining a first energy value of a first region and a second energy value of a second region of a to-be-detected image, wherein the first region is a single-pixel projection region of a first color, the second region is a single-pixel projection region of a second color adjacent to the first region, and the to-be-detected image comprises at least one first region and at least one second region; and
the first energy value and the second energy value are used to calculate a first parameter of the to-be-detected image, wherein the first parameter indicates definition of the to-be-detected image.

2. The method according to claim 1, wherein the method further comprises:
obtaining a third energy value, wherein the third energy value is a background light energy value of a detection environment; and
the first energy value, the second energy value, and the third energy value are used to calculate the first parameter of the to-be-detected image.

3. The method according to claim 1 or 2, wherein the to-be-detected image comprises a plurality of first regions, and the plurality of first regions are consecutively arranged in a horizontal direction.

4. The method according to any one of claims 1 to 3, wherein the to-be-detected image comprises a plurality of first regions, and the plurality of first regions are consecutively arranged in a vertical direction.

5. The method according to any one of claims 1 to 4, wherein the to-be-detected image comprises a plurality of first regions, and the plurality of first regions are arranged in a cross shape.

6. The method according to any one of claims 2 to 5, wherein that the first energy value, the second energy value, and the third energy value are used to calculate the first parameter of the to-be-detected image comprises:
a second parameter, the second energy value, and the third energy value are used to calculate the first parameter of the to-be-detected image, wherein the second parameter comprises at least one of the following: an average value, a weighted average value, and a median of the plurality of first energy values.

7. The method according to any one of claims 2 to 6, wherein that the first energy value, the second energy value, and the third energy value are used to calculate the first parameter of the to-be-detected image comprises:
the first energy value, a third parameter, and the third energy value are used to calculate the first parameter of the to-be-detected image, wherein the third parameter comprises at least one of the following: an average value, a weighted average value, and a median of the plurality of second energy values.

8. The method according to any one of claims 1 to 6, wherein the first parameter comprises an optical modulation transfer function MTF or a contrast transfer function CTF.

9. The method according to claim 7 or 8, wherein that the first energy value, the second energy value, and the third energy value are used to calculate the first parameter of the to-be-detected image comprises:
the first parameter comprises a first horizontal parameter and a first vertical parameter;
the first horizontal parameter is obtained through calculation based on a second horizontal parameter, a third horizontal parameter, and the third energy value; the second horizontal parameter comprises second parameters of the plurality of first regions that are consecutively arranged in the horizontal direction; and the third horizontal parameter comprises third parameters of the plurality of second regions that are consecutively arranged in the horizontal direction; and
the first horizontal and vertical are calculated based on a second vertical parameter, a third vertical parameter, and the third energy value; the second vertical parameter comprises second parameters of the plurality of first regions that are consecutively arranged in the vertical direction; and the third vertical parameter comprises third parameters of the plurality of second regions that are consecutively arranged in the vertical direction.

10. The method according to any one of claims 1 to 9, wherein the method further comprises: the first color is white, and the second color is black.

11. A detection apparatus, configured to detect resolving power of a projection device, comprising a receiving screen and an energy detector, wherein
the projection device is configured to project a to-be-detected image, wherein the to-be-detected image comprises at least one first region and at least one second region, the first region is a single-pixel projection region of a first color, and the second region is a single-pixel projection region of a second color adjacent to the first region;
the receiving screen is configured to receive and display the to-be-detected image;
the energy detector is configured to obtain a first energy value of the first region and a second energy value of the second region of the to-be-detected image; and
the first energy value and the second energy value are used to calculate a first parameter of the to-be-detected image, wherein the first parameter indicates definition of the to-be-detected image.

12. The apparatus according to claim 11, wherein
the energy detector is further configured to obtain a third energy value, wherein the third energy value is a background light energy value of a detection environment; and the first energy value, the second energy value, and the third energy value are used to calculate the first parameter of the to-be-detected image.

13. The apparatus according to claim 11 or 12, wherein the energy detector comprises at least one of a luminance meter and an optical power meter.

14. The apparatus according to any one of claims 11 to 13, wherein that the energy detector is configured to obtain the first energy value of the first region and the second energy value of the second region of the to-be-detected image comprises:
the energy detector comprises a light inlet hole, wherein the light inlet hole is configured to detect the first energy value of the first region and the second energy value of the second region of the to-be-detected image, and a region of the light inlet hole is less than or equal to a display region in which a single pixel in the to-be-detected image is projected onto the receiving screen.

15. The apparatus according to any one of claims 11 to 14, wherein the apparatus further comprises a translation stage, wherein
the translation stage is configured to fasten the projection device, or the translation stage is configured to fasten the energy detector; the translation stage comprises at least a first axis and a second axis; and the first axis and the second axis are coplanar and not parallel to each other.

16. The apparatus according to claim 15, wherein the first axis is perpendicular to the second axis.

17. The apparatus according to claim 15 or 16, wherein the translation stage further comprises a third axis, and the third axis is perpendicular to a plane in which the first axis and the second axis are located.

18. The apparatus according to any one of claims 12 to 17, wherein the apparatus further comprises a terminal device, wherein
the terminal device is configured to connect to and control the translation stage to move in a direction of the first axis or a direction of the second axis; and
the terminal device is further configured to: connect to the energy detector, receive the first energy value, the second energy value, and the third energy value that are obtained from the energy detector, and calculate the first parameter of the to-be-detected image based on the first energy value, the second energy value, and the third energy value.

19. The apparatus according to claim 18, wherein
the terminal device is further configured to: connect to the projection device, and control the projection device to project the to-be-detected image.

20. An energy detector,
the energy detector is configured to obtain a first energy value of a first region and a second energy value of a second region of a to-be-detected image, wherein the first region is a single-pixel projection region of a first color, the second region is a single-pixel projection region of a second color adjacent to the first region, the to-be-detected image comprises at least one first region and at least one second region, and the first energy value and the second energy value are used to calculate a first parameter of the to-be-detected image, wherein the first parameter indicates definition of the to-be-detected image.

21. The energy detector according to claim 20, wherein the energy detector is further configured to obtain a third energy value; the third energy value is a background light energy value of a detection environment; and the first energy value, the second energy value, and the third energy value are used to calculate the first parameter of the to-be-detected image.

22. A terminal device, comprising:
obtaining a first energy value and a second energy value, wherein the first energy value comprises an energy value of a first region of a to-be-detected image, the second energy value comprises an energy value of a second region of the to-be-detected image, the first region is a single-pixel projection region of a first color, the second region is a single-pixel projection region of a second color adjacent to the first region, and the to-be-detected image comprises at least one first region and at least one second region; and
calculating a first parameter of the to-be-detected image based on the first energy value and the second energy value, wherein the first parameter indicates definition of the to-be-detected image.

23. The terminal device according to claim 22, further comprising: obtaining a third energy value, wherein the third energy value is a background light energy value of a detection environment; and
calculating the first parameter of the to-be-detected image based on the first energy value, the second energy value, and the third energy value.

24. A computer storage medium, comprising computer instructions, wherein when the computer instructions are run on a computer, the computer is enabled to perform the method according to any one of claims 1 to 10.

25. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the method according to any one of claims 1 to 10.
